Europäisches Patentamt

European Patent Office

Office européen des brevets

(19)

(11) Publication number: **0 227 609**
**A2**

## (12) EUROPEAN PATENT APPLICATION

(21) Application number: **86830345.4**

(22) Date of filing: **14.11.86**

(51) Int. Cl.⁴: **B 41 J 19/76**
**B 41 J 19/14, G 06 K 15/16**

(30) Priority: **15.11.85 JP 255991/85**
**15.11.85 JP 255996/85**
**05.09.86 JP 208067/86**

(43) Date of publication of application:
**01.07.87 Bulletin 87/27**

(84) Designated Contracting States: **DE FR GB IT**

(71) Applicant: **CASIO COMPUTER COMPANY LIMITED**
**6-1, 2-chome, Nishi-Shinjuku**
**Shinjuku-ku Tokyo (JP)**

(72) Inventor: **Hato, Junichi Pat. Dep. Dev. Div. Hamura R&D**
**Cent.**
**Casio Comp. Co.Ltd. 3-2-1,Sakae-cho Hamura-machi**
**Nishitama-gun Tokyo 190-11 (JP)**

**Yoshida, Junichi Pat. Dep. Dev. Div. Hamura R&D C.**
**Casio Comp. Co.Ltd. 3-2-1,Sakae-cho Hamura-machi**
**Nishitama-gun Tokyo 190-11 (JP)**

**Kurakake, Sigeo Pat. Dep. Dev. Div. Hamura R&D C.**
**Casio Comp. Co.Ltd. 3-2-1,Sakae-cho Hamura-machi**
**Nishitama-gun Tokyo 190-11 (JP)**

(74) Representative: **Zorzoli, Franco**
**c/o BUGNION S.p.A. Via Carlo Farini 81**
**I-20159 Milan (IT)**

The title of the invention has been amended (Guidelines for Examination in the EPO, A-III, 7.3).

(54) **Print head pitch control for an electronic printer.**

(57) An apparatus for controlling the shift pitch of the print head in an electronic printer includes a designating section (14) for designating a desired shift pitch of a print head, a determining section (15) for determining the pitch most approximate to the designated shift pitch (the most approximate pitch is an integer multiple of the minimum shift pitch of the print head), a control section (21, 31) for controlling the shift of the print head at the determined pitch, or at the pitch after the determined pitch is corrected by the minimum shift pitch of the print head, and a select section (20) for selecting the pitch at which the print head is shifted under control of the control section.

F I G. 1

## Description

Device for controlling the shift pitch of a print head in an electronic printer and method for controlling the same

This invention relates to a device and a method for controlling the shift pitches of a print head in an electronic printer of the type in which the shift pitches of the print head can be appropriately set by an operator.

Electronic printers have been widely used for word processors and electronic typewriters, for example. In this type of printer, the line pitches and the column pitches can be set by an operator. The line and column pitches mean the predetermined distances for the discrete movement of the print head in the line and column directions, respectively.

U.S. Patent No. 4,488,827 discloses an electronic printer. In this printer, a plurality of line and column pitches are preset to, for example, 1/8, 1/10 and 1/12 inches, and 1/15, 1/16 and 1/20 inches, respectively. The operator can select the desired pitches from those provided when using the printer. The applicant of the present invention proposed another electronic printer. This printer is described and claimed in the Japanese Patent Office on August 8, 1983. This patent application was disclosed in Japanese Patent Disclosure No. 60-34873. The application was filed in the USA. on July 30, 1984, bearing Serial No. 635,889. In the printer, the size of characters printed above one line is detected. On the basis of the detected character size, printer line and column pitches are automatically determined by the pitches already provided.

As described above, in the conventional electronic printer, it is common practice that an operator selects proper line and column pitches from those provided.

However, the desired line and column pitches are frequently not available as preset pitches. One example of such a case is printing by an electronic printer using a square formatted paper, on which lines are printed, for example, a manuscript paper in Japan. In the case of the formatted paper, the size of the frame is fixed and depends on the type of paper used. The size of the frame determines the line pitch and the column pitch of the printer. The correct pitches for the frame preset in the formatted paper are frequently not contained in those provided by electronic printers currently marketed. In such printers, the printed characters are not accurately aligned within the space defined by the lines on the formatted paper. This problem becomes more conspicuous when the measuring unit of the pitches on the paper frame is different from that of the preset pitches of the printer. Such a case is, for example, when the measuring unit of the former is in mm and that of the latter is in inches. Let us consider a specific example in which an electronic printer with the following specifications prints characters on a formatted paper whose column pitch is 5 mm. In this case, since the minimum shift pitch is 1/180 inch. ( = 0.1411 mm), 5/0.1411 = 35.4333 (mm/pitch). Therefore, if the print head is moved one time at the minimum shift pitch 35.4333 (mm/pitch). it is possible to set the line pitch of the print head at 5 mm. However, in the electronic printer, the movement of the printer head is made at a pitch width of several times the minimum pitch. Therefore, the line pitch of this printer head must be set to either 35/180 inch (35 pitches) or 36/180 inch (36 pitches). The difference between the line pitch of the printer head and the desired line pitch is very small in the control of a single line-direction movement. However if the control is successively repeated many times, the pitch error accumulates. As a result the printed characters will not fit in the spaces defined by frame lines on the formatted paper.

An object of this invention is to provide both an apparatus and a method for controlling the pitch of the shift of a print head in an electronic printer which is capable of controlling the shift pitch by pitch most approximate to a desired shift pitch, even if the electronic printer does not provide the desired preset shift pitch of the print head when a formatted paper is used.

According to one aspect of this invention, there is provided an apparatus for controlling the shift of the print head in an electronic printer comprising: means for designating a proper shift pitch to the print head which shifts above a record paper in response to a shift command, means for determining a proper pitch most approximate to the desired shift pitch as designated by the designating means, which is an integer multiple of a minimum shift pitch of the print head, first print head shift control means for controlling the shifting of the print head at the pitch determined by the determining means, second print head shift control means for controlling the print head at the pitch after the shift pitch determined by the determining means is corrected by an amount of minimum shiftable pitch of the print head, and means for determining the shifting of the print head after selecting one of the two shift means in response to the shift command given to the print head.

According to another aspect of this invention, there is provided a method for controlling the shift pitch of a print head in an electronic printer comprising: the step of designating a desired shift pitch of a print head, the step of moving above the record paper, in response to a shift command, the step of determining the pitch most approximate to the desired shift pitch designated by the designating step, the most approximate pitch being an integer multiple of the minimum shiftable pitch of the print head, the step of inputting condition data to determine a shift pitch of the print head, the step of checking if the updated condition data input in the condition data updating the condition data and the step of controlling the shift of the print head at the shift pitch determined as the most approximate pitch, when the checking step decides that the updated data satisfies the predetermined condition, and controlling the shift of the print head at the shift pitch after the shift pitch determined as the most approximate shift pitch is corrected by the minimum shiftable pitch of the print head. when the predetermined condition is not satisfied.

With the arrangements and the steps of the method of this invention described above. even when the electronic printer does not provide the desired column pitch and line pitch for the paper format used, the desired pitch can be accommodated by the shifting of the print head, to properly fit the printed characters within the paper lines.

When the print head is successively shifted on the formatted paper at the pitch most approximate to the desired shift pitch, it is moved while the shift pitch is appropriately corrected. As a result, shift pitch control with a high accuracy can be realized. Especially when the column pitch and line pitch are specified, that is to say, the frame where a character is to be printed is specified, this feature has an advantage of being able to print accurately within the frames.

This invention can be more fully understood from the following detailed description when taken in conjunction with the accompanying drawings, in which:

Fig. 1 is a block circuit diagram of a first embodiment of the shift pitch control apparatus according to this invention;

Fig. 2 is a table showing the contents of the format table, which is useful in explaining the present invention;

Fig. 3 is a view illustrating an example of the printing on a paper;

Fig. 4 is a flowchart useful in explaining the print operation of the circuit in Fig. 1;

Fig. 5 is a block circuit diagram of a second embodiment of the apparatus according to this invention;

Fig. 6 is a typical block circuit diagram of the carriage control section and the platen control section shown in Fig. 5;

Fig. 7 is a flowchart useful in explaining the operation of the second embodiment shown in Fig. 5;

Figs. 8A and 8B are tables useful in explaining the shift pitches which are actually output; and

Fig. 9 is a flowchart useful in explaining the operation of a third embodiment of the apparatus according to this invention.

The present invention will be described using an embodiment in which an electronic printer according to this invention is applied to a word processor.

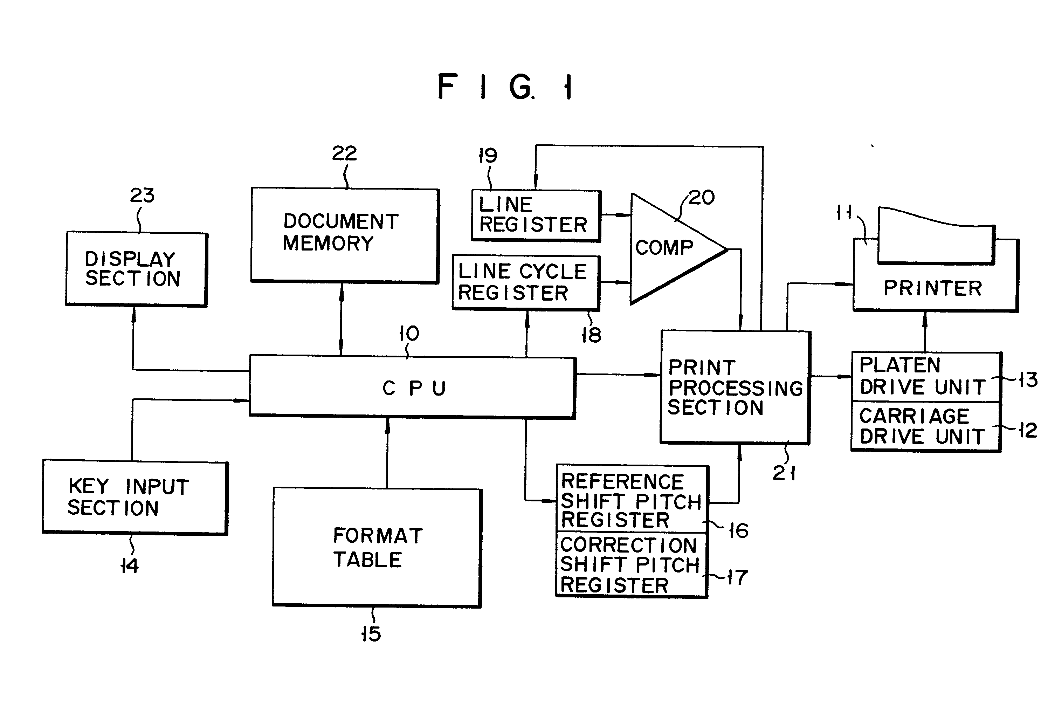

A first embodiment of an electronic printer according to this invention will be described referring to Figs. 1 to 4.

Fig. 1 is a block circuit diagram of this word processor. CPU (Central Processing Unit) 10 executes overall control of the word processor. CPU 10 is connected to printer 11 via print processing section 21. Printer 11 is connected to carriage drive circuit 12 and platen drive circuit 13, both controlled by print processing section 21. The carriage (not shown) is shifted in the line direction relative to the record paper, in response to a drive command from carriage drive circuit 12. The paper is shifted in the column direction in response to a drive command from platen drive circuit 13. 1 mm is the minimum shift pitch (one pitch) of the carriage which is shifted in response to the drive command from carriage drive circuit 12. The minimum shift pitch (one pitch) of the paper, which is shifted in response to the drive command from platen drive circuit, is also 1 mm. On the carriage of printer 11 is mounted a print head (not shown) for successively printing the print data transferred from CPU 10 via print processing section 21. With the line-direction movement of the carriage, one-line data, transferred from print processing section 21, are successively printed.

CPU 10 is connected to key input section 14 and format table 15. Key input section 14 is provided with a key for designating a line pitch in 0.25 mm steps and in the range of 5 mm to 15 mm, which is to be determined by the width between lines of formatted paper. Format table 15 stores reference shift pitch data, correction shift pitch data and line period. Reference shift pitch data represents the reference values of different line pitches which can be selected by operating key input section 14. Correction shift pitch data are added to reference shift pitch data. Line period means a fixed number of lines between the line where the shift pitch is corrected by correction shift pitch data and the line in which the next shift pitch correction is made. CPU 10 is connected to reference shift pitch register 16, correction shift pitch register 17 and line period register 18. These three registers store reference shift pitch data, correction shift pitch data and line period data, respectively. These are transferred from format table 15, in accordance with one line pitch as designated by the key operation of key input section 14. Reference shift pitch data and correction shift pitch data, which are stored in reference shift pitch register 16 and correction shift pitch register 17, respectively, are transferred to print processing section 21. Print processing section 21 is connected to line register 19 for storing line data. which are updated each time the paper is shifted one line in the column direction in response to the return command. This command is output on the completion of the printing of one line of data. Line data as stored in line register 19 is compared with line period data as stored in line period register 18, by comparator 20. The result of the comparison is input to print processing section 21. On the basis of this result. either of the following two operations is selected: The paper must be shifted in the column directed by a shift amount based on the reference shift pitch in register 16, or the paper must be shifted in the column direction on the basis of the shift pitch, which is the sum of the data of the reference shift pitch in register 16 and the correction shift pitch data in register 17. Then, the platen driver 13 is controlled.

CPU 10 is connected to text memory 22 for storing print data of a plurality of lines, and to display section 23 for displaying the input data and the like as keyed in by key input section 14.

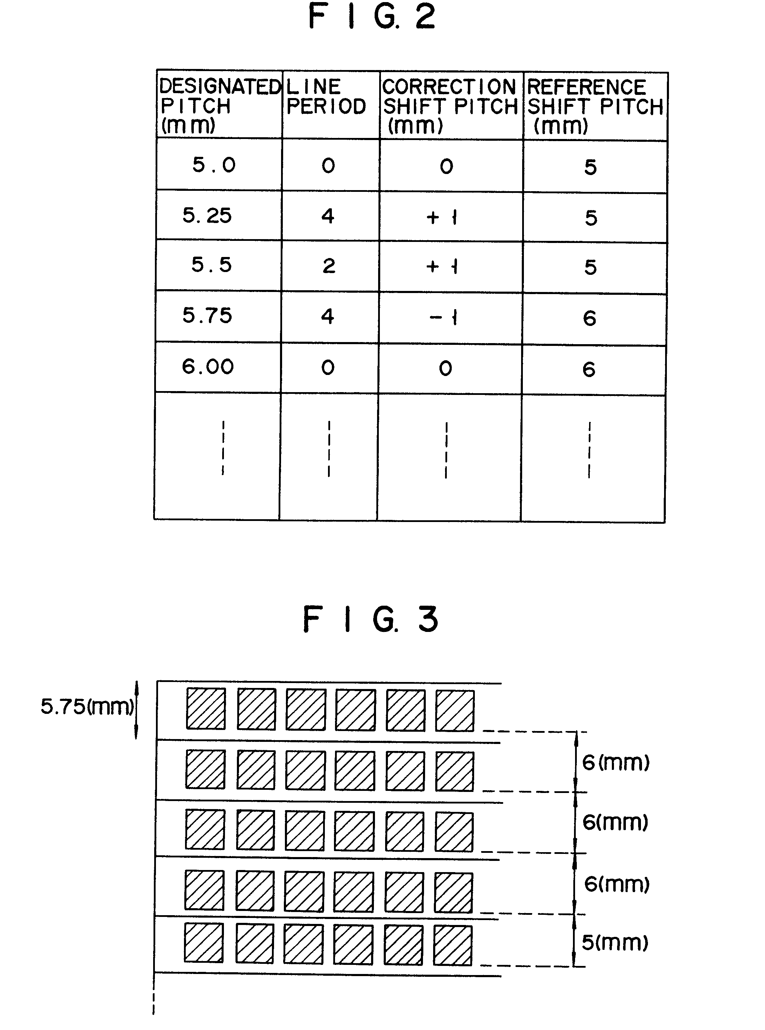

Fig. 2 illustrates the contents of format table 15. Format table 15 stores line period data, correction shift pitch data and reference shift pitch data. These data correspond to the line pitches as designated by key input section 14. Several line pitches are provided. at 0.25 mm steps. from 5.0 mm to 15.0 mm,

such as 5.0 mm, 5.25 mm, 5.5 mm, and 5.75 mm. For example, the line pitch of 5.75 mm corresponds to line period of "4", correction shift pitch of "-I" mm and reference shift pitch of "6" mm.

Fig. 3 shows a print image when characters are printed on a formatted paper with line pitch of 5.75mm. In this case. since the line pitch is 5.75 mm, every time one line is printed. a shift pitch (the movement or shifting in the column direction) of 5.75 mm is desirable. The minimum shift pitch (one pitch) of the paper in the column direction by a drive command from the platen drive circuit is preferably I mm. For this reason, a pitch such as 5.75 mm cannot be obtained. In the word processor in this embodiment, there is a difference between the desired line pitch (e.g. 5.75 mm) and the actual line pitch (e.g. 5 mm or 6 mm) of the paper. In this case, the difference is corrected over a fixed time interval, which depends on the pitch difference. The printed data will not extend outside the lines of the paper, and a satisfactory printing can be obtained. As shown in Fig. 3, when the designated line pitch is 5.75 mm. the shift pitch in the column direction of the paper for the first printing is first set to 6 mm. The shift pitch for the second and third should also be set to 6 mm. Thus, as can be understood from Fig. 3, the position of the printing on the fourth line of the paper will be at the very lower part of the line. This is because the paper, which should have been moved in the column direction three times, at 5.75 mm each time, was actually moved three times at 6 mm each time. Also it is because the total difference the three moves is:

$(6 - 5.75) \times 3 = 0.75$ mm.

For this reason, the shift pitch in the column direction for the fourth printing is set to 5 mm. Then, the position of the data printed on the fifth line, as can be seen from Fig. 3, will be in the upper part of the line. The position in relation to the position of the line, is exactly the same position as that of the first line. The actual error that occurs in the fifth line is:

$(6 - 5.75) \times 3 + (5 - 5.75) \times I = 0,$

and the error has disappeared. If pitch control is done in this manner every time the paper has moved four lines in the column direction. the printing, even on formatted paper with preset line spacing will be satisfactory in its overall appearance. The data used in the above pitch control of the paper is shown in the format table of Fig. 2. When the designated pitch is 5.75 mm, first the shift pitch of the paper is set to 6 mm (the reference shift pitch). At the time of the fourth paper shift (the line period), a -I mm (the correction shift pitch) correction is added to the reference shift pitch 6 m, to produce a 5 mm shift pitch. The paper is then shifted 5 mm for each fourth line.

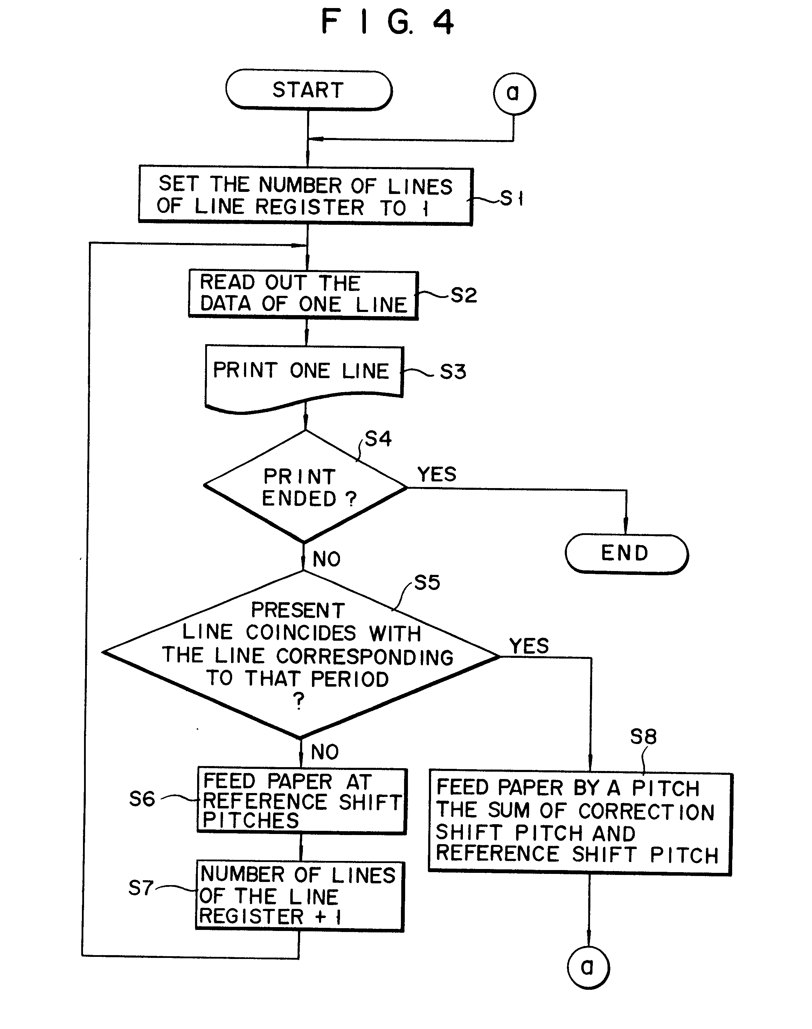

The above shift pitch will be further explained, using the flowchart of Fig. 4. It is assumed that the specified shift pitch of 5.75 mm has already been keyed in by the operator. using the keyboard operation of key input section I4. The reference shift pitch of 6 mm, the line period and the correction shift pitch are each transferred to reference shift pitch register I6. line period register I8 and correction shift pitch registor I7 where they are stored.

First. "0" is input, as in the initial setting, to line register I9 (step SI). Then, the data from one line is read out from print processing section 2I by text memory 22 (step S2). One line is printed (step S3). After the printing of one line is finished, it is determined if the printing of every line has been completed or not. If the printing is not finished, the control moves to step S4, where the contents of line register I9 and line period register I8 are compared by comparator 20, and if they are not identical, step 5 is executed. In step S5. print processing section 2I applies a shift command to platen drive circuit I3, and based on the "6" data stored in reference shift pitch register I6, controls platen drive circuit I3 so as to feed the paper 6 mm. Then, "I" is added to the data stored in line register I9, and after setting it in line register I9 (step S7), the control returns to step S2.

Also, in the above step S5, if the data of registers I8 and I9 are identical, print processor section 2I adds "-I" stored in correction shift pitch register I7 to the "6" data stored in reference shift pitch register I6, to obtain data "5". Using this data, it controls platen drive circuit I3 so that the paper is fed 5 mm (step S8). After that, control returns to step SI, and the above operations are repeated.

In the above embodiment, only the description of the line shift pitch control is given, but the column shift pitch control can certainly be achieved in the same manner.

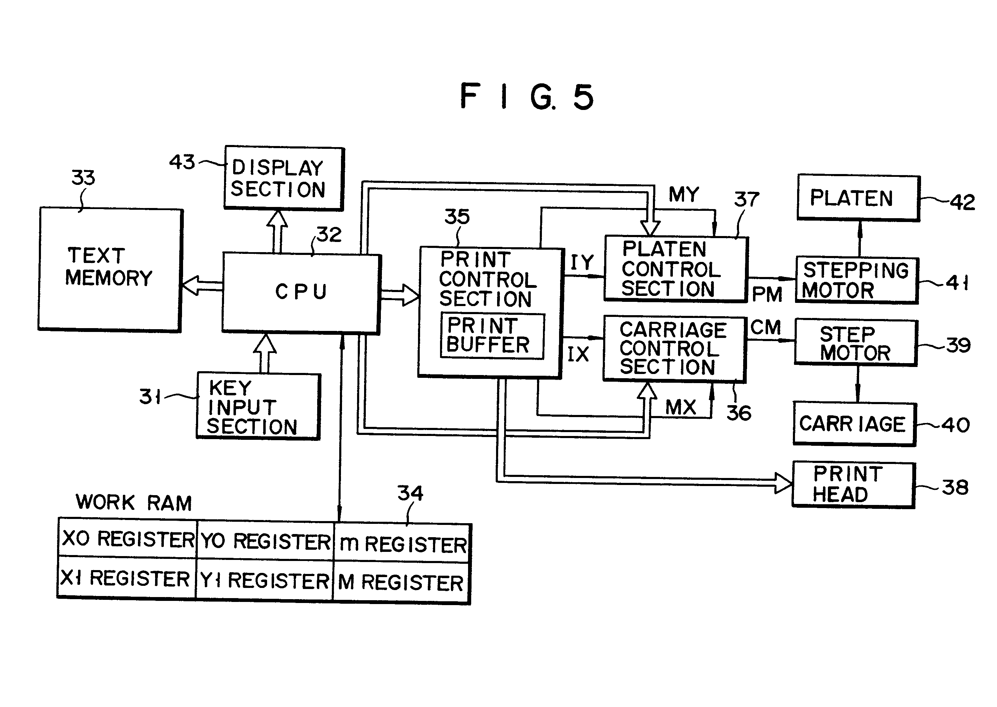

Another embodiment of the shift pitch control apparatus according to this invention will now be described, referring to Figs. 5 to 8B.

Fig. 5 is a fundamental block circuit diagram of this word processor. The word processor is provided with key input section 3I having a keyboard. On this keyboard are installed numeric keys, character keys, print keys and function keys, as are mounted on general word processors. When data such as text data and format data are input from key input section 3I, key code data are output responding to the key operation and transferred to CPU (central processing unit) 32. to designate a corresponding input processing program.

CPU 32 executes the input processing, text preparation processing and print processing of the word processor, according to the prestored microprograms. CPU 32 is connected to text memory 33, work RAM (random access memory) 34, print control section 35 and display section 43.

Text memory 33 stores the input TEXT DATA. The write-in and read-out of TEXT DATA are controlled by CPU 32. Work RAM 34 contains several registers. X0 resister and Y0 register store the register data for indicating the lengths (mm in unit) in X- and Y-direction. respectively, on the two dimensional plane, which are input to designate the printing range. XI register and YI register store the number of data printing to be printed in the printing range thus designated, i.e., such as number of characters in one line and the number of lines. m register stores the data of 0.I4III... (mm) (I/I80 inch) which is the minimum shift pitch of the carriage to be explained later. M register stores the data of 0.42333... (mm) (I/60 inch). which is the minimum shift pitch ( = 3 pitches) of the platen to be explained later.

Print control section 35 includes print buffer PB for temporarily storing the text data read out from text memory 33 by the control of CPU 32. More specifically, print buffer stores the suceeding one-line data each time one line is printed. Print control section 35 applies drive output request signals MX and MY to carriage control section 36 and platen control section 37, respectively, so that carriage control section 36 and platen control section 37 will output carriage drive signal CM and platen drive signal PM respectively. Print control section 35 supplies initial reset signals IX and IY to carriage control section 36 and platen control section 37, respectively. Furthermore, print control section 35 transfers the contents of input buffer to print head 38. The electronic printer used in this embodiment is a thermal printer with a print head 38 consisting of 24 thermal print elements, and can print a maximum of 50 characters of 24 × 24 dots in one line. Print head 38, mounted on carriage 40, is shift-controlled by carriage 40 in the paper-line direction.

Carriage control section 36 operates the carriage shift data transferred from CPU 32, and converts the data of operation result into carriage drive signal CM and then outputs it. By control of the output signal, stepping motor 39 rotates one pitch (1/180 inch) to control the shift of carriage 40. Platen control section 37 has an arrangement similar to that of carriage control section 38. Platen control section 38 operates the platen drive data transferred from CPU 32, converts the data of operation result into platen drive signal PM and then outputs it. By control of the output signal, stepping motor 41 rotates 3 pitches (1/60 inch) to control the shift of platen 42.

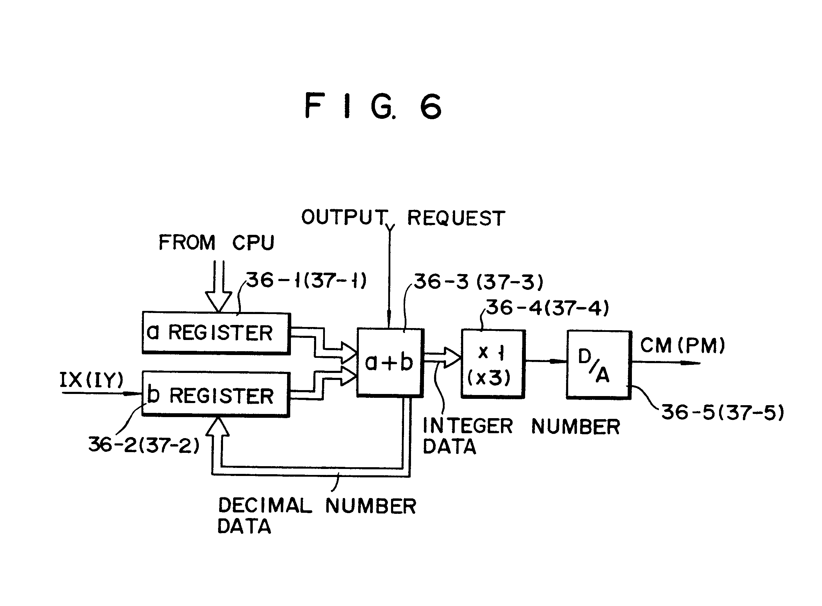

Next, the arrangement of carriage control section 36 will be described in detail, referring to Fig. 6. Carriage control section 36 includes adder 36-3 for adding together the data stored in a register 36-1 and b register 36-2. In response to drive output request signal MX transferred from print control section 35, carriage 36 applies the integer data of the data obtained by the addition, to multiplier 36-4, and the decimal number data to b register 36-2. The a register 36-1 is supplied with the data representing the number of pitches calculated by CPU 32. The b register 36-2 is supplied with decimal data from adder 36-3. In response to initial reset signal IX from print control section 35, b register 36-2 stores data "0". Multiplier 36-4 multiplies the integer data from adder 36-3 by "1". The result data output from multiplier 36-4 is transferred to D/A (digital/analog) converter 36-5 where it is converted into carriage drive signal CM and supplied to stepping motor 39.

Platen control section 37 has a similar arrangement to that of carriage control section 36, and the description of it will therefore be omitted. In Fig. 6, numerals in parentheses such as (37-1) and (37-2) are those for platen control section 37. In platen control section 37, multiplier 37-4 multiplies the integer data from adder 37-3 by "3".

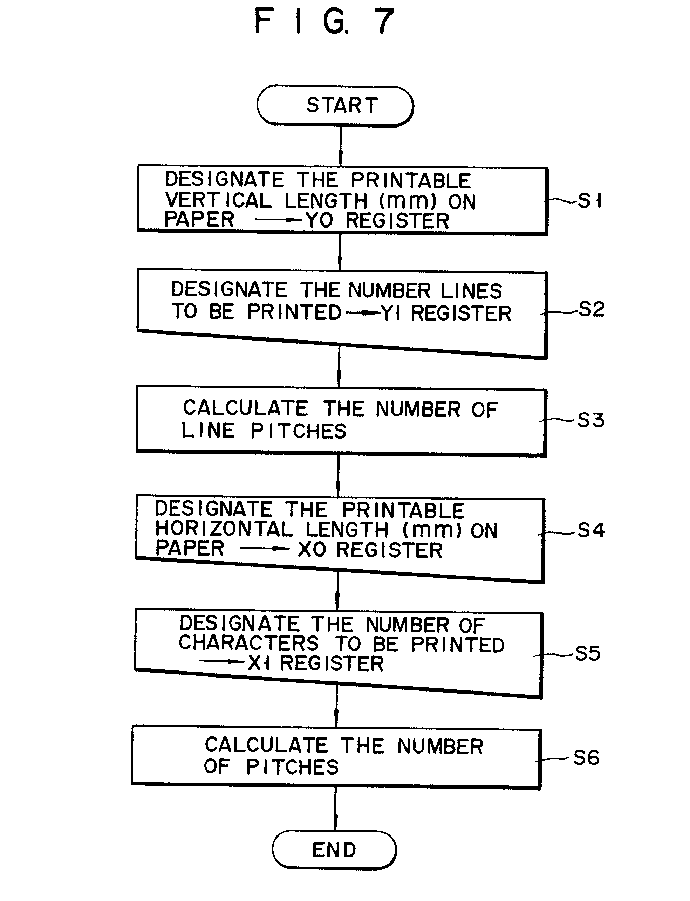

A detailed description of the operation of the second embodiment of this invention, configured as explained above, will be given based on the flowchart of Fig. 7.

Now, an example in which the printing is performed on formatted paper (with pre-printed frames for characters), having a column number (number of characters in one line) of 50 charactes, and a line number of 30.

First, the length of this formatted paper, from the top frame of the first line to the bottom frame of the 30th line, i.e., the printing range vertical length, is corrected accurately, using the millimeters as the unit. When the format setting mode is set up, using the mode keys (not shown) of key input section 31, and specified value data is input (in millimeters) in a predetermined key operation procedure, CPU 32 executes the operations according to the flow of Fig. 7.

First, CPU 32 detects the input measured value data, and as a result, so that vertical length data (in millimeters) is transferred to the Y0 register of work RAM 34 (step II). Then, when the number of lines to be printed within the printing range is entered in the predetermined key operation procedure, the number of printing lines that was input is transferred to the YI register of work RAM 34 (step SI2). When the vertical length of the printing range, and the number of lines to be printed in that range is input in this way, the calculation used to find the line pitch value corresponding to this data is performed in step SI3. The line pitch value resulting from this calculation is transferred to register 37-I of platen control section 37 (step SI3).

Number of shift pitch = $Y0/(YI \times M)$,
where Y0 = vertical length in (mm),
YI = number of printed lines, and
M = minimum shift pitch data of the platen (0.42333... mm for 3 pitches).

For example, if the printing range vertical length is 150 mm, the number of printing lines is 30, and the line pitch is 5 mm, "150" is set into the Y0 register of step SII. And "30" is set in YI register. Then, an operation based on the mathematical formula above is performed in step SI3. The number of the shift pitch is found to be 11.81102... mm, and this result is stored in a register 37-I of platen control section 37.

After the above step SI3, control moves to step SI4, where CPU 32 is placed in the status specified by the operator. The operator can accurately measure the horizontal length of the printing range from the left edge of the first column of the formatted paper to the right edge of the 50th column, using the millimeter unit scale. Next, when the measurement value data, which is in accordance with the specified key operation procedure is input, this data is transferred to the X0 register in work RAM 34 (step SI4). When the number of printed characters to be printed in one line of the printing range is input, this data is transferred to the XI register in work RAM 34 (step SI5). When the horizontal length of the printing range, and the number of printed characters are input, in the following step SI6, the number of the line pitch is found by the following calculation, and the resulting number of the line pitch is transferred to a register 36-I of carriage control section 36.

Number of the shift pitch = $X0/(XI \times m)$
where X0 = horizontal length (mm),
XI = the number of printed characters, and
m = the data of the minimum shift pitch of the carriage, 0.l4lll....mm.

For example, if the horizontal length of the printing range is 250 mm, and the number of printed characters is 50 (a column pitch per one character is 5 mm) then, "250" is set into the X0 register in step SI4. Also, "50" is set into register XI in step SI5, and an operation based on the above mathematical formula is performed in step SI6. The number of the column pitch is found to be 35.433... mm, and this result is stored in a register 36-I of carriage control section 36. When the operation is executed by CPU 37, according to Fig. 37, the printing operation is begun.

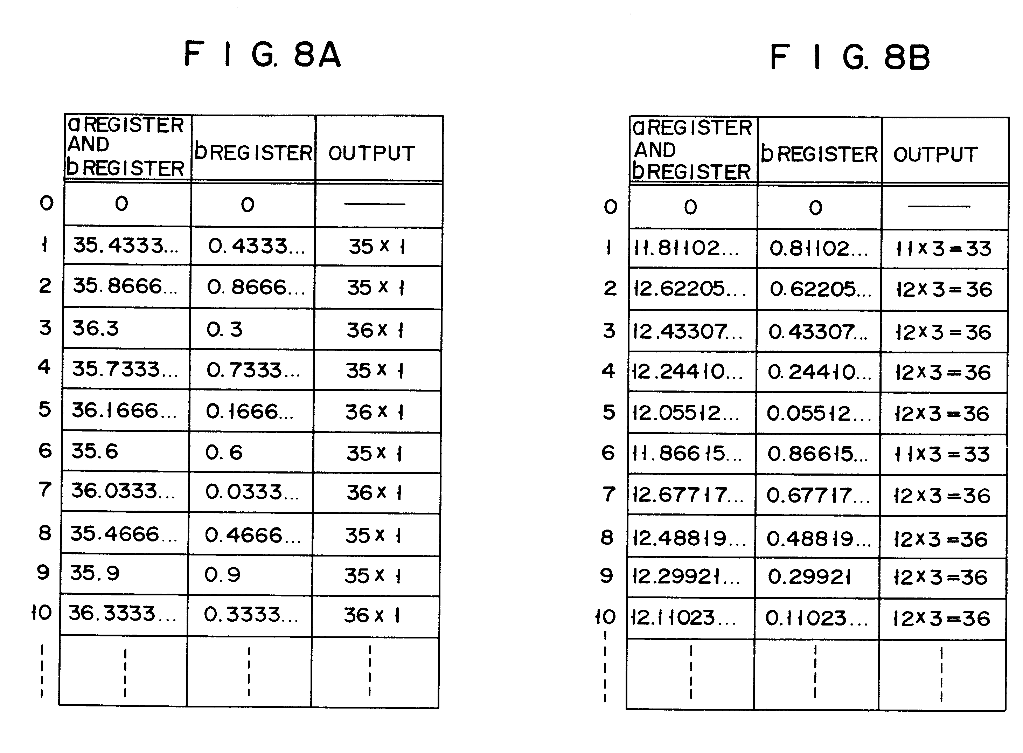

First, the formatted paper is set in the printer. In this case, the print head is set to the point where the printing of the specified printing range begins (the left edge of the frame of first column). In this state, when the print keys (not shown) of key input section 3I are operated, the data of the first line is read out from text memory 33, and transferred to print buffer of print control section 35. Then, print control section 35 outputs an initial reset signal IX to carriage control section 36, and then outputs a drive output request signal MX. As a result, in carriage control section adder 36, "0" is set into b register 36-2, 36-3 is driven, the data stored in a register 36-I (35.4333...), and the data stored in b register 36-2, (0), are added together. The decimal part (0.4333...) of the resulting sum (35.4333...) is transferred to b register 36-2, and the integer number part "35" is applied to multiplier 36-4. Accordingly, the data output from multiplier 36-4 is "35", and is sent to D/A converter 36-5. As a result, carriage 40 is moved at a pitch of 35 per line (I pitch = 0.I4lll mm), and at the same time, and the printing of one character is performed by print head 38. In this embodiment, because the size of one character is 24 dots, the column shift pitch is (35 - 24 = 9 pitch). Next, when the drive output request signal MX is applied to carriage control section 36, since the decimal data (0.4333...) is stored in b register 36-2, the result output from adder 36-3 is (35.4333... + 0.4333... = 3.8666...). Accordingly, the data output from multiplier 36-4 is "35", and carriage 40 is moved at a pitch of 35 pitches per character. Also, at the next timing after the drive output request signal MX is applied to carriage control section 36, the contents of b register 36-2 are (0.8666...), and the output of adder 36-3 is (35.4333... + 0.8666... = 36.2999... = 36.30. Because "36" is output from multiplier 36-4, carriage 40 will move at a pitch of 36 dots per character. The above operation is successively repeated in synchronism with the output timing of the drive output request signal. Fig. 8A shows a detailed example of this case. In the figure, the vertical axis is timing. (a + b) of the horizontal axis represents the output contents of adder 36-3. (b) is the stored data of b register 36-2. The (output) column shows the output data from multiplier 36-4 (the actual number of the column pitch). As shown clearly in Fig. 8A, carriage control section 36 controls the shift of print head 40, so that the pitch during the initial timing (I) and the next timing (2) is 35, 36 for the next timing (3), and 35 again for the next timing (4).

Thus, every time the printing of one line, in the manner shown above, is finished, a drive output request signal MY is output from print control section 35 to platen control section 37. In this way, platen control section 37 executes similar operations to those of carriage control section 36. Fig. 8B is a view showing this operation. The difference of the platen control section 37 from carriage control section is that a register 37-I of platen control section 37 stores "Il.8ll02..." and multiplier 37-4 stores the data resulting from the multiplication of an integer number data "3" from adder 37-3 by "3". As a result, as shown in Fig. 8B, platen control section 37 controls the drive of platen 42 so that the return pitch for the first line will be "33" (integer multiple of "3" as the minimum shift pitch), the return pitch for the second to fifth lines is "36" (integer multiple of "3" as the minimum shift pitch) and that the return pitch for the sixth line is "33". As described above, in this embodiment, when, in the process of calculating the the column pitch and line pitch, decimal fractions occur, the decimal fractions are accumulated. When the accumulated value reaches "I", "I" is added to the number of pitches (an integer number), to correct the number of pitches. With this arrangement, in the printer whose minimum shift pitch of the platen is I/60 inch and that of the carriage is I/80 inch, even if the column shift pitch and line shift pitch are designated 5 mm, these shifts are controlled to minimize the error.

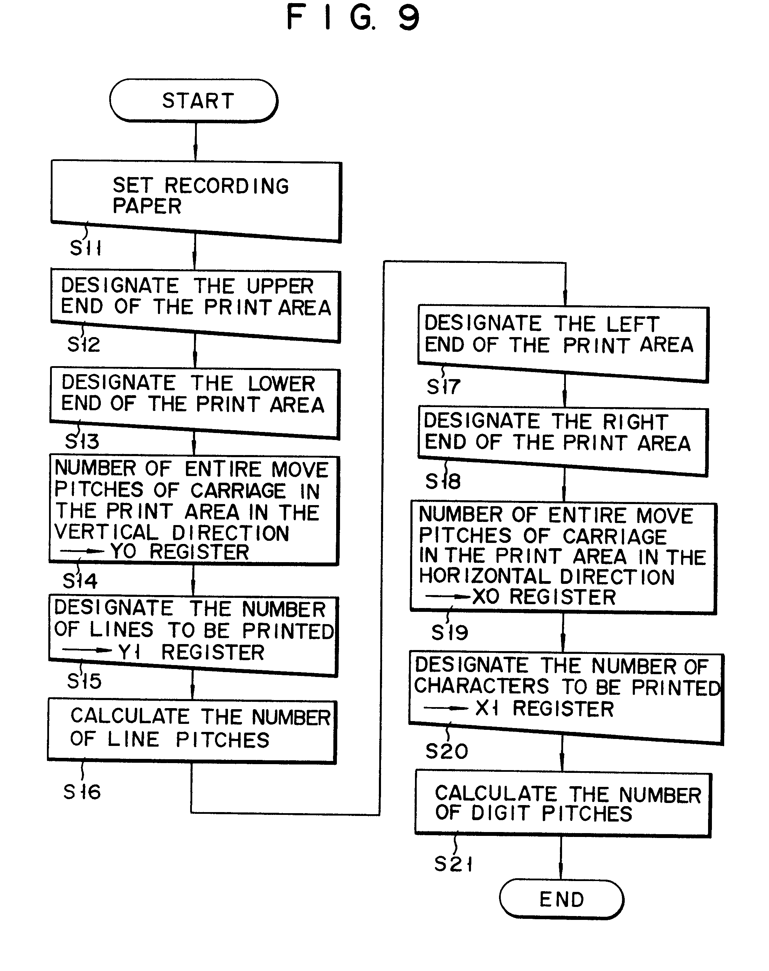

A third embodiment of the shift pitch control apparatus according to this invention will be described, referring to Fig. 9. This embodiment, like the second embodiment, refers to a word processor to which this invention is applied. Fig. 9 is a flowchart useful in explaining the operation of this embodiment. Since the fundamental block circuit diagram of this word processor is the same as Fig. 5, the description will be given referring to Fig. 5. In the second embodiment, when designating the printing range, numerical data in millimeters, as obtained by measuring the size with a ruler, are input. In this embodiment, when designating the printing range, by driving carriage 40 and platen 42 to shift print head 38 in relation to the paper, horizontal and the vertical printing range of a formatted paper are designated in pitch. With the exception of this point, this embodiment is fundamentally the same as the second embodiment.

When designating the printing range, the formatted paper is placed in the printer (step S2I). Under this condition, if the cursor key (not shown) is operated, carriage 40 shifts in the horizontal direction, pitch by pitch, for each operation of the cursor key. In this way, when print head 38 is set on the top edge of the printing range (step S22), the position data is transferred to CPU 32. Next, when print head 38 is set on the bottom edge of the printing range (step S23) by operating the cursor, the position data is transferred to CPU 32. When the top edge and the bottom edge of the printing range are designated, based on the input data, the number of all the shift pitches (in dot) of the print head 38, which are arranged in the vertical direction in the printing range, are calculated. and then transferred to Y0 register in work RAM 34 (step S24). When the number of print lines is input, the data are transferred to YI register in work RAM 34 (step S25). With these input data, the number of all the shift pitches in Y0 register are divided by the number of print lines stored in the YI register. The data thus obtained (the number of line pitches) are transferred to a register 37-I of platen control section 37 (step S26).

After the number of pitches for one line is obtained as described above, in order to calculate the number of pitch for one column, print head 38 is set at the left edge of the first line in the printing range (step S27), and then is set to right edge of the last line in the printing range (step S28). By the setting, in the next step S29, based on the right edge position data and left edge position data as are just input, the number of all the shift pitches of the print head 38 in the horizontal direction in the printing range is calculated. The data thus obtained are transferred to X0 register in work RAM 34. When the number of print characters for one line is input, the data are transferred to YI register in work RAM 34 (step S30). With these input data, in the next step S32, the number of all the shift pitches in X0 register are divided by the number of the print characters in XI register. The data respresenting the number of column pitches thus obtained are transferred to a register 36-I in carriage control section 36 (step S3I).

In carriage control section 36 and platen control section 37, the operations similar to those in the second embodiment are executed. Accordingly, this embodiment has the same effects as those of second embodiment.

In the above-mentioned embodiment, the "+I" correction has been described. The same thing is true for the "-I" correction. In the embodiment, for the shifting of the print head for the line feed and column feed, the fraction part is separated and the figures following the decimal point are accumulated. Alternatively, by raising the figures below the decimal point, the minus amount in the fractional part is accumulated. When the minus amount exceeds the minimum shift amount, the minus correction is applied to the integer part.

While the correction calculation is made for each shift in the above embodiment, the number of these pitches are previously stored according to the number of line and columns. When moving the print head, these data are read out.

## Claims

I. An apparatus for controlling the pitch of the shifting of the print head in an electronic printer, comprising:
means (I4; 3I) for designating, in response to a shift command, the desired pitch of the shifting of the print head, which moves above the record paper;
means (I5, 36, 37) for determining a proper pitch most approximate to said desired shift pitch as designated by said designating means, which is an integer multiple of a minimum shift pitch of the print head:
first shift control means (2I, I3, 36, 39) for controlling the shifting of the print head at said proper pitch as determined by said determining means:
second shift control means (2I, I3; 36, 39) for controlling the print head at said proper pitch after said proper shift pitch determined by said determining means is corrected by an amount of minimum shiftable pitch of the print head; and
means (20; 36-3, 37-3) for selecting either of said first shift means or said second shift means in response to said shift command of the print head, and for determining the shifting of said print head.

2. An apparatus for controlling the pitch of the shifting of the print head in an electronic printer according to claim I, characterized in that
said means for determining the shift of said print head includes:
a counting means for counting the number of shift commands for the print head; and
means for checking as to if the count by said count means coincides with a preset count, and when these do not coincide, selects said first shift control means, and when these coincide with each other, selects said second shift control means.

3. An apparatus for controlling the pitch of the shifting of the print head in an electronic printer according to claim I, characterized in that
said means for determining the shifting of said print head includes means for accumulating the difference between the shift pitch designated by said designating means and the pitch determined by said determining means for every shift command of said print head; and
select means for selecting either said first shift control means or said second shift control means according to the value of the pitch differences is accumulated by said accumulating means.

4. An apparatus for controlling the pitch of the shifting of the print head in an electronic printer according to claim 3, characterized in that said select means includes a means which compares, in response to the shift command of the print head, an integer value of a ratio of the minimum shift pitch of the print head to the accumulated value after it is updated in said accumulating means, with an integer value of a ratio of the minimum shift pitch of said print head before it is updated in said accumulating means, and the accumulated value, and when these are equal to each other, said first shift control means is selected, and said second shift control means is selected when these are not equal to each other.

5. An apparatus for controlling the pitch of the shifting of the print head in an electronic printer according to claim I, characterized in that said designating means includes input means for inputting the measured numerical data when the shift pitch of the print head is measured in a specific measuring unit; and means for designating the shift pitch of said print head on the basis of the measured numerical data input by said input means and the measured value data when the minimum shift pitch of said print head is measured in said specific measuring unit.

6. An apparatus for controlling the pitch of the shifting of the print head in an electronic printer according to claim 5. characterized in that said means for designating a desired shift pitch of said print head is caldulated by

$a = X/M$

where a: The shift pitch of the print head,

X: The measured numerical data when the shift pitch of the print head is measured by the specific measuring unit,

M: The measured value data when the minimum pitch of the print head is measured in the specific measuring unit.

7. An apparatus for controlling the pitch of the shifting of the print head in an electronic printer according to claim I, characterized in that said designating means includes:

means for designating a desired shift length of the print head in one moving direction,

means for inputting numerical data representing the number of shift commands necessary for said print head to shift the predetermined length designated by said shift length designating means, and

means for designating a desired shift pitch of said print head on the basis of the shift length designated by said shift length designating means and numerical data input by said input means.

8. An apparatus for controlling the pitch of the shifting of the print head in an electronic printer according to claim 7. characterized in that said means for designating a desired shift pitch of said print head is calculated by

$a = X0/XI$

where a: The shift pitch of print head,

X0: A desired shift length of the print head in one moving direction,

XI: The numerical data representing the number of shift commands necessary for the print head to move said desired length.

9. An apparatus for controlling the pitch of the shifting of the print head in an electronic printer according to claim 7, characterized in that means for designating a desired shift length of said print head includes input means for inputting measured numerical data when a desired shift length of the print head in one moving direction is measured, and means for obtaining a desired shift length of the print head on the basis of the measured numerical data input by said input means and the measured numerical data when the minimum shift pitch of the print head is measured in a specific measuring unit.

I0. An apparatus for controlling the pitch of the shifting of the print head in an electronic printer according to claim 9, characterized in that said means for obtaining said predetermined shift length is obtained by

$X0 = x0/M$

where X0: A desired shift pitch of the print head in one moving direction,

x0: Measured numerical data when a desired shift length of the print head in one moving direction is measured in a specific measuring unit,

M: Measured numerical data when the minimum pitch of the print head is measured in a specific measuring unit.

II. An apparatus for controlling the pitch of the shifting of the print head in an electronic printer according to claim 7, characterized in that said means for designating the desired shift length of said print head designates both ends of a desired shift length of the print head in one moving direction by the movement of the print head, and for designating a desired shift length of the print head on the basis of the counted number of steps moved in the minimum shift pitch of the print head when the print head is moved for designating both ends of the moving length.

I2. An apparatus for controlling the pitch of the shifting of the print head in an electronic printer according to claim I, characterized in that said means for designating desired shift pitch of the print head includes means for designating the column shift pitch of the print head for a line shift command of the print head relative to the record paper.

I3. An apparatus for controlling the pitch of the shifting of the print head in an electronic printer according to claim I, characterized in that said means for designating a desired shift pitch of the print head includes means for designating a line shift pitch of the print head for a column shift command of the print head relative to the record paper.

I4. A method for controlling a shift pitch of a print head in an electronic printer comprising the steps of: designating a desired shift pitch of a print head, moving above the record paper, in response to a shift command; determining the pitch most approximate to said desired shift pitch designated by said designating step, said most approximate pitch being an integer multiple of the minimum shiftable pitch of said print head; inputting condition data to determine a shift pitch of the print head; updating the condition data, which is input in said condition inputting step, and checking if the updated condition data satisfies a predetermined condition; and controlling the shift of the print head at the shift pitch determined by said most approximate pitch determining pitch, when said checking step decides that said updata data satisfies the predetermined condition, and controlling the shift of the print head at the shift pitch after the shift pitch determined by said most approximate shift pitch is corrected by the minimum shiftable pitch of the print head, when said predetermined condition is not satisfied.

15. The method according to claim 14, characterized in that said checking step includes a step for counting the number of shift commands of the print head, and a step for checking whether or not the count data as the predetermined condition data satisfies the predetermined condition, as the result of checking if the count data counted by said counting step is coincident with the predetermined count data.

16. The method according to claim 14, characterized in that said checking step includes a step for accumulating for each shift command of the print head the difference between the shift pitch designated by said designating step and the pitch designated by said determining step, and a step for checking if the accumulated data of pitch differences as accumulated by said accumulating step, satisfies the predetermined condition.

17. The method according to claim 16, characterized in that said checking step includes a step for checking if the accumulated data, as the predetermined condition data, satisfies the predetermined condition, in response to a shift command given to the print head, whether an integer value of a ratio of the updated accumulated data, to the minimum shift pitch of said print head after it is updated in said accumulated step, is equal to an integer value of a ratio of the accumulated data before it is updated in said accumulating step.

# F I G. 1

F I G. 2

0227609

| DESIGNATED PITCH (mm) | LINE PERIOD | CORRECTION SHIFT PITCH (mm) | REFERENCE SHIFT PITCH (mm) |
|---|---|---|---|
| 5.0 | 0 | 0 | 5 |
| 5.25 | 4 | +1 | 5 |
| 5.5 | 2 | +1 | 5 |
| 5.75 | 4 | −1 | 6 |
| 6.00 | 0 | 0 | 6 |
| ⋮ | ⋮ | ⋮ | ⋮ |

F I G. 3

F I G. 4

0227609

```
        ( START )                    (a)
            │                          │
            │←─────────────────────────┘
            ▼
  ┌──────────────────────────┐
  │ SET THE NUMBER OF LINES  │── S1
  │ OF LINE REGISTER TO 1    │
  └──────────────────────────┘
            │
   ┌────────┤
   │        ▼
   │  ┌──────────────────┐
   │  │ READ OUT THE     │── S2
   │  │ DATA OF ONE LINE │
   │  └──────────────────┘
   │        │
   │        ▼
   │  ┌──────────────────┐
   │  │ PRINT ONE LINE   │── S3
   │  └──────────────────┘
   │        │
   │        ▼
   │       ╱╲  S4
   │      ╱  ╲      YES
   │     ╱PRINT╲────────────┐
   │     ╲ENDED?╱           │
   │      ╲  ╱              ▼
   │       ╲╱            ( END )
   │      NO│
   │        ▼
   │       ╱╲  S5
   │      ╱PRESENT╲
   │     ╱ LINE    ╲   YES
   │    ╱COINCIDES  ╲──────────┐
   │   ╱WITH THE LINE╲         │
   │   ╲CORRESPONDING╱         │
   │    ╲TO THAT     ╱         │
   │     ╲PERIOD?   ╱          │
   │      ╲       ╱            │
   │       ╲    ╱              │
   │      NO│                  │  S8
   │        ▼                  ▼
   │  ┌──────────────┐   ┌─────────────────────┐
   │  │ FEED PAPER AT│   │ FEED PAPER BY A PITCH│
   │  │ REFERENCE    │   │ THE SUM OF CORRECTION│
   │  │ SHIFT PITCHES│   │ SHIFT PITCH AND      │
   │  └──────────────┘   │ REFERENCE SHIFT PITCH│
   │   S6   │            └─────────────────────┘
   │        ▼                  │
   │  ┌──────────────┐         ▼
   │  │ NUMBER OF    │        (a)
   │  │ LINES OF THE │
   │  │ LINE         │
   │  │ REGISTER + 1 │
   │  └──────────────┘
   │   S7   │
   └────────┘
```

# F I G. 5

**33** TEXT MEMORY

**43** DISPLAY SECTION

**32** CPU

**31** KEY INPUT SECTION

**35** PRINT CONTROL SECTION — PRINT BUFFER

**37** PLATEN CONTROL SECTION

**42** PLATEN

**41** STEPPING MOTOR

**36** CARRIAGE CONTROL SECTION

**39** STEP MOTOR

**40** CARRIAGE

**38** PRINT HEAD

IY   IX   MY   MX   PM   CM

WORK RAM

| XO REGISTER | YO REGISTER | m REGISTER |
|-------------|-------------|------------|
| XI REGISTER | YI REGISTER | M REGISTER |

**34**

0227609

# F I G. 6

OUTPUT REQUEST

FROM CPU

36-1(37-1)

36-3 (37-3)

36-4(37-4)

a REGISTER

IX(IY)

b REGISTER

a+b

x 1 (x3)

D/A

CM(PM)

36-2(37-2)

INTEGER NUMBER DATA

36-5(37-5)

DECIMAL NUMBER DATA

F I G. 7

START

DESIGNATE THE PRINTABLE VERTICAL LENGTH (mm) ON PAPER ⟶ YO REGISTER — S1

DESIGNATE THE NUMBER LINES TO BE PRINTED ⟶ YI REGISTER — S2

CALCULATE THE NUMBER OF LINE PITCHES — S3

DESIGNATE THE PRINTABLE HORIZONTAL LENGTH (mm) ON PAPER ⟶ XO REGISTER — S4

DESIGNATE THE NUMBER OF CHARACTERS TO BE PRINTED ⟶ XI REGISTER — S5

CALCULATE THE NUMBER OF PITCHES — S6

END

## F I G. 8A

| | a REGISTER AND b REGISTER | b REGISTER | OUTPUT |
|---|---|---|---|
| 0 | 0 | 0 | ———— |
| 1 | 35.4333... | 0.4333... | 35 × 1 |
| 2 | 35.8666... | 0.8666... | 35 × 1 |
| 3 | 36.3 | 0.3 | 36 × 1 |
| 4 | 35.7333... | 0.7333... | 35 × 1 |
| 5 | 36.1666... | 0.1666... | 36 × 1 |
| 6 | 35.6 | 0.6 | 35 × 1 |
| 7 | 36.0333... | 0.0333... | 36 × 1 |
| 8 | 35.4666... | 0.4666... | 35 × 1 |
| 9 | 35.9 | 0.9 | 35 × 1 |
| 10 | 36.3333... | 0.3333... | 36 × 1 |
| | | | |

## F I G. 8B

| | a REGISTER AND b REGISTER | b REGISTER | OUTPUT |
|---|---|---|---|
| 0 | 0 | 0 | ———— |
| 1 | 11.81102... | 0.81102... | 11 × 3 = 33 |
| 2 | 12.62205... | 0.62205... | 12 × 3 = 36 |
| 3 | 12.43307... | 0.43307... | 12 × 3 = 36 |
| 4 | 12.24410... | 0.24410... | 12 × 3 = 36 |
| 5 | 12.05512... | 0.05512... | 12 × 3 = 36 |
| 6 | 11.86615... | 0.86615... | 11 × 3 = 33 |
| 7 | 12.67717... | 0.67717... | 12 × 3 = 36 |
| 8 | 12.48819... | 0.48819... | 12 × 3 = 36 |
| 9 | 12.29921... | 0.29921 | 12 × 3 = 36 |
| 10 | 12.11023... | 0.11023... | 12 × 3 = 36 |
| | | | |

# F I G. 9

```
        ┌─────────────┐
        │    START    │
        └──────┬──────┘
               │
   ┌───────────▼───────────┐
   │  SET RECORDING        │
   │  PAPER                │
   └───────────┬───────────┘
          S11  │
   ┌───────────▼───────────┐
   │ DESIGNATE THE UPPER   │
   │ END OF THE PRINT AREA │
   └───────────┬───────────┘
          S12  │
   ┌───────────▼───────────┐
   │ DESIGNATE THE LOWER   │
   │ END OF THE PRINT AREA │
   └───────────┬───────────┘
          S13  │
   ┌───────────▼───────────┐
   │ NUMBER OF ENTIRE MOVE │
   │ PITCHES OF CARRIAGE IN│
   │ THE PRINT AREA IN THE │
   │ VERTICAL DIRECTION    │
   │  ──► YO REGISTER      │
   └───────────┬───────────┘
          S14  │
   ┌───────────▼───────────┐
   │ DESIGNATE THE NUMBER  │
   │ OF LINES TO BE PRINTED│
   │  ──► Y1 REGISTER      │
   └───────────┬───────────┘
          S15  │
   ┌───────────▼───────────┐
   │ CALCULATE THE NUMBER  │
   │ OF LINE PITCHES       │
   └───────────┬───────────┘
          S16  │
```

```
   ┌───────────────────────┐
   │ DESIGNATE THE LEFT    │
   │ END OF THE PRINT AREA │
   └───────────┬───────────┘
          S17  │
   ┌───────────▼───────────┐
   │ DESIGNATE THE RIGHT   │
   │ END OF THE PRINT AREA │
   └───────────┬───────────┘
          S18  │
   ┌───────────▼───────────┐
   │ NUMBER OF ENTIRE MOVE │
   │ PITCHES OF CARRIAGE   │
   │ IN THE PRINT AREA IN THE│
   │ HORIZONTAL DIRECTION  │
   │  ──► XO REGISTER      │
   └───────────┬───────────┘
          S19  │
   ┌───────────▼───────────┐
   │ DESIGNATE THE NUMBER OF│
   │ CHARACTERS TO BE PRINTED│
   │  ──► X1 REGISTER      │
   └───────────┬───────────┘
          S20  │
   ┌───────────▼───────────┐
   │ CALCULATE THE NUMBER  │
   │ OF DIGIT PITCHES      │
   └───────────┬───────────┘
          S21  │
           ┌───▼───┐
           │  END  │
           └───────┘
```